**Europäisches Patentamt**

**European Patent Office**

**Office européen des brevets**

(19)

(11) Veröffentlichungsnummer : **0 457 926 B1**

(12)

# EUROPÄISCHE PATENTSCHRIFT

(45) Veröffentlichungstag der Patentschrift :
**11.11.92 Patentblatt 92/46**

(51) Int. Cl.$^5$ : **B29C 47/00, // B29L23:00**

(21) Anmeldenummer : **90101345.8**

(22) Anmeldetag : **24.01.90**

(54) **Verfahren und Vorrichtung zum Herstellen von Kunststoff-Schläuchen, -Rohren oder-Bahnen.**

(43) Veröffentlichungstag der Anmeldung :
**27.11.91 Patentblatt 91/48**

(45) Bekanntmachung des Hinweises auf die
Patenterteilung :
**11.11.92 Patentblatt 92/46**

(84) Benannte Vertragsstaaten :
**BE DE FR GB LU NL**

(56) Entgegenhaltungen :
**EP-A- 0 071 349**
**EP-A- 0 173 872**
**EP-A- 0 338 350**
**DE-A- 2 639 551**
**DE-A- 3 003 620**
**US-A- 2 668 323**
**US-A- 3 065 097**
**US-A- 3 709 642**
**US-A- 3 750 948**
**US-A- 4 011 128**

(73) Patentinhaber : **DÜRBECK GMBH & CO. KG**
**Am Brennerwasser 14**
**W-6420 Lauterbach/Hessen (DE)**

(72) Erfinder : **Russ, Wilhelm**
**Berliner Strasse 10**
**W-6423 Wartenberg (DE)**
Erfinder : **Loos, Reinhard**
**Auf der Zinn 20**
**W-6407 Schlitz (DE)**
Erfinder : **Schneider, Kurt**
**Am Wehrberg 2**
**W-6425 Lautertal-Hopfmannsfeld (DE)**
Erfinder : **Schwarz, Volker**
**Herbsteiner Weg 12**
**W-6420 Lauterbach Frischborn (DE)**

(74) Vertreter : **Olbricht, Karl Heinrich, Dipl.-Phys.**
**Am Weinberg 15**
**W-3556 Niederweimar (DE)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung bezieht sich auf Verfahren nach dem Oberbegriff von Anspruch 1 und Anspruch 2 sowie auf eine Vorrichtung nach dem Oberbegriff von Anspruch 4.

Bei der Kunststoff-Verarbeitung und auch bei der Verwendung können sich materialbedingt elektrostatische Aufladungen einstellen, z.B. an Spritzgußteilen und Folien aus Polyolefinen. An den aufgeladenen Flächen können dann diese untereinander oder auch angezogene Fremdstoffe wie Staub, Flusen, Papierstückchen u.dgl. haftenbleiben. Auftretende Entladungen bringen nicht selten eine hohe Explosionsgefahr mit sich. Selbst soweit bereits Folienwerkstoffe mit sog. innerer Antistatik-Ausrüstung benutzt werden, bestehen Risiken vor allem bei der Handhabung von Stäuben, pulverförmigem Gut usw. in Verbindung mit Kunststoffolien, etwa beim Abfüllen in geeignete Beutel und Säcke.

Aus der US-PS 2 668 323 ist ein Schlauchblasverfahren bekannt, bei dem ein fortlaufender Luftaustausch innerhalb des entstehenden Schlauches dafür sorgen soll, daß ein Zusammenkleben seiner Innenflächen zwischen den Abzugswalzen verhindert wird. Hierzu ist die Zufuhr von Druckluft, eventuell mit Feuchtigkeitsbeladung, und eine Absaugung des im Blasschlauch befindlichen Gasvolumens vorgesehen. Damit geht aber gleichzeitig die unkontrollierte Abfuhr auch des Flüssigkeitsgehalts einher, so daß sich keine konstanten antistatischen Oberflächeneigenschaften einstellen können.

Mit einem Verfahren der eingangs erwähnten Art, wie es aus der DE-B-30 03 620 bekannt ist, erzielt man durch dosierte Zufuhr von Wasser im Moment der Formgebung die gewünschten antistatischen Eigenschaften des Kunststoff-Produkts, indem Wasser zusammen mit Stützluft durch einen Strangpreßkopf hindurch zugeführt wird, vorzugsweise konzentrisch zu einer Ringdüse, wobei sich das Antistatikum an der bzw. den Oberfläche(n) mit dem feinverteilt zugeführten Wasser verbindet. Allerdings erlaubt es diese Methode mit kontinuierlichem Stützluftabzug nicht, den vorgenannten Innenluftaustausch im Blasschlauch so anzuwenden, daß eine hinreichende Flüssigkeitskonzentration aufrechterhalten bleibt. Vielmehr findet herkömmlich eine ungleichmäßige Abfuhr von Wasserteilchen gerade durch den turbulenten Luftaustausch statt, der an sich zur schnellen Verfestigung und stabilen Antistatik-Ausrüstung des erzeugten Schlauches bzw. Rohres durchaus erwünscht ist.

Die US-A-3 750 948 (Saito) beschreibt eine Vorrichtung zum dosiert-gleichförmigen Abscheiden eines feinen Pulvers an der Innenfläche eines Blasschlauches mittels elektrostatischer Aufladung. Am Ende einer Förderleitung sitzt ein Sprühkopf in Form eines Isolierringes mit einer Elektrode, die über ein Hochspannungskabel mit wenigstens 30 kV versorgt wird. Förderleitung und Kabel durchsetzen den Dorn des Blaskopfes schräg zu dessen Achse mit geeigneter Isolierung. In der auch zur Erdung dienenden Förderleitung ist eine biegsame Schneckenwelle zum Hochfördern des Pulvers vorhanden. Dies und die Hochspannungs-Anordnung bedingen einerseits beträchtlichen Konstruktionsaufwand und andererseits Unsicherheit im Betrieb, da weder mechanische Störungen der Fördereinrichtung noch ungewollte elektrische Entladungen auszuschließen sind. Mittel zum Zuführen einer Flüssigkeit an die Innenwandung eines Blasschlauches sind ebensowenig vorgesehen wie ein Innenluftaustausch oder ein Luftabsaugkanal.

In der DE-A-2 639 551 (Reifenhäuser) ist eine Blasvorrichtung beschrieben, die im Blaskopf von einem Luftzuführrohr durchsetzt ist, in dem zentrisch ein Luftabsaugrohr angeordnet ist. Dieses trägt einen eingeschnürten Anschlußkörper mit einem Lochzylinder. Der Austrittsspalt rund um den Anschlußkörper ist von einem sog. Turbulenzerzeuger vertikal umgeben, der die Blasluft "weich" verwirbeln soll. Irgendwelche Maßnahmen zum antistatischen Ausrüsten der hergestellten Schlauchfolien sind aus der Veröffentlichung nicht ersichtlich.

Zum Besprühen der Innenseite eines Blasschlauches mit Gas, Flüssigkeit oder Pulver gemäß US-A-3 709 642 (Stannard) durchsetzt den Luftzufuhrkanal im Kern des Blaskopfes eine Zuführleitung, die am oberen Ende wenigstens eine Verteileröffnung aufweist und beheizbar sein kann, um das zu zerstäubende Material zu verdampfen. Ein Innenluftaustausch fehlt; eine Ausführungsform weist ein Flüssigkeitsbad im Inneren eines abwärts gerichteten Schlauchteils auf.

Die Erfindung bezweckt, die Herstellung von Kunststoff-Schläuchen, -Rohren und -Bahnen mit antistatischer Ausrüstung in wirtschaftlicher Weise zu verbessern und zu beschleunigen. Ein wichtiges Ziel der Erfindung ist die Schaffung und Ausgestaltung von Verfahren und Mitteln, die unter Anwendung des Folienblasverfahrens eine gegenüber dem Stand der Technik bessere Produktqualität bei gleichzeitig beträchtlicher Leistungssteigerung liefern.

Verfahrensmerkmale der Erfindung sind in den Ansprüchen 1 bis 3 angegeben. Eine erfindungsgemäße Vorrichtung ist im kennzeichnenden Teil von Anspruch 4 präzisiert; Weiterbildungen sind Gegenstand der Ansprüche 5 bis 8.

Nach der Erfindung ist materialbedingt zweierlei Verfahrensführung vorgesehen. Gemäß Anspruch 1 erfolgt die antistatische Ausrüstung dadurch, daß die zu zerstäubende Flüssigkeit Antistatika enthält, die sich an der Innenfläche des Blasschlauches anlagern und mit ihr fest verbinden. Das hat den Vorteil, daß die Strangpreßmasse nicht besonders aufbereitet werden muß, setzt allerdings deren Reaktionsfähigkeit mit den an der Oberfläche aufgebrachten Antistatika voraus. Laut Anspruch 2 werden umgekehrt dem zu formenden Material hydrophile Antistatika wie Fettsäureester zugesetzt, die durch bloße Anlagerung feiner Wasserteilchen aus der Zerstäuberluft aktiviert werden.

In beiden Fällen wird die zur antistatischen Ausrüstung benötigte Flüssigkeitsmenge nach der Erfindung in vorgegebenem Abstand oberhalb des Blaskopfes gesteuert zerstäubt, während Innenluftaustausch im Blasschlauch unter fortlaufender Teil-Luftabfuhr stattfindet. Auf diese Weise wird mit denkbar geringem Aufwand eine wesentliche Steigerung sowohl der Wirtschaftlichkeit als auch der Produktionsqualität erzielt. Während herkömmlich die Herstellung von Kunststoffolien mit antistatischer Ausrüstung nur an Extrudern ohne Innenluftaustausch möglich war, gelingt es dank der erfindungsgemäß oberhalb des Blaskopfes in vorgegebenem Abstand erfolgenden Zerstäubung, auch mit dem thermodynamisch vorteilhaften Innenluftaustausch die gewünschte antistatische Ausrüstung im Oberteil des fortlaufend erzeugten Blasschlauches wirksam anzubringen. Die Verlagerung dieses Vorganges vom Blaskopf weg erweist sich als außerordentlich vorteilhaft sowohl für die Abkühlung und Verfestigung des Blasschlauches als auch für seine kontinuierliche und gleichmäßige Beschickung mit feinen bzw. feinsten Flüssigkeitsteilchen, die an den Innenflächen des Blasschlauches rasch und dauerhaft antistatische Eigenschaften erzeugen. Das erlaubt einen besonders schnellen Abzug des Fertigmaterials, das die Qualität von herkömmlichem Material bei weitem übertrifft, vor allem hinsichtlich des elektrischen Oberflächenwiderstandes.

Verfahrenstechnisch ist es günstig, wenn gemäß Anspruch 3 die Teil-Luftabfuhr aus dem Blasschlauch-Inneren im Gegenstrom zur Zufuhr der Stützluft und der zu zerstäubenden Flüssigkeit erfolgt. Diese Verfahrensführung ist thermodynamisch überaus zweckmäßig, weil sich optimale Temperatur- und Strömungsverhältnisse bequem einregeln und aufrechterhalten lassen.

Vorrichtungsmäßig sieht die Erfindung gemäß dem kennzeichnenden Teil von Anspruch 4 vor, daß die als Sprühkopf ausgebildete, in vorgegebenem Abstand oberhalb der Ringdüse angeordnete innere Düse am oberen Ende eines den Blaskopf zentrisch durchsetzenden Tragrohres sitzt und daß die den Blaskopf durchsetzende innere Düse von separaten Leitungen gespeist ist, die im Inneren eines Luftabsaugkanals verlaufen, welcher seinerseits von dem Stützluft-Zuführrohr umgeben ist. Man hat also einen Leitungs- bzw. Rohrstrang, der durch den Blaskopf insbesondere zentrisch hindurchgeht. Die Preßmasse wird durch die innere Düse hindurch nach oben extrudiert. Der Aufbau ist konstruktiv sehr einfach und übersichtlich, daher auch wartungsfreundlich.

Eine wichtige Ausgestaltung besteht gemäß Anspruch 6 darin, daß das Tragrohr an oder nahe der Ringdüse einen Strömungsstabilisator haltert oder bildet. Damit wird die beim Einströmen der Stützluft auftretende Verwirbelung im unteren Teil des Blasschlauches gedämpft, ohne die Kühlwirkung an den entstehenden Folien-Innenflächen zu beeinträchtigen. Der Strömungsstabilisator kann von Austrittsöffnungen, Düsen o.dgl. am oder im Tragrohr gebildet sein. Es ist auch möglich und erfindungsgemäß in Betracht gezogen, Dämpfungsflächen von geeigneter Gestaltung am Tragrohr anzubringen, beispielsweise in Form von ebenen oder gewundenen Flügelblättern, Rippen o.dgl. Nach Anspruch 7 ist als Strömungsstabilisator oder zusätzlich zu diesem eine Lochdose vorhanden, die das Tragrohr im Axialbereich des Kühlringes konzentrisch umgibt.

Für die Absaugung beim Innenluftaustausch sieht Anspruch 5 zwischen der inneren Düse und dem Strömungsstabilisator einen Luftabsaugering oder -stutzen vor, so daß die vom heißen Produkt erwärmte Luft verhältnismäßig nahe an der Material-Ringdüse und jedenfalls im unteren Teil des Blasschlauches abgesaugt wird, was wesentlich zu rascher Abkühlung und mithin zur Verfestigung des Schlauchmaterials beiträgt.

Im Hinblick auf eine auch chemisch definierte Verfahrensführung ist es ferner vorteilhaft, wenn gemäß Anspruch 8 den Zerstäuber-Zuführleitungen Reinigungsfilter und/oder Druckregler vorgeschaltet sind, so daß die Zerstäubung in exakter Dosierung vor sich geht und stets ausreichende Reinheit der zugeführten Flüssigkeitsmenge gewährleistet ist.

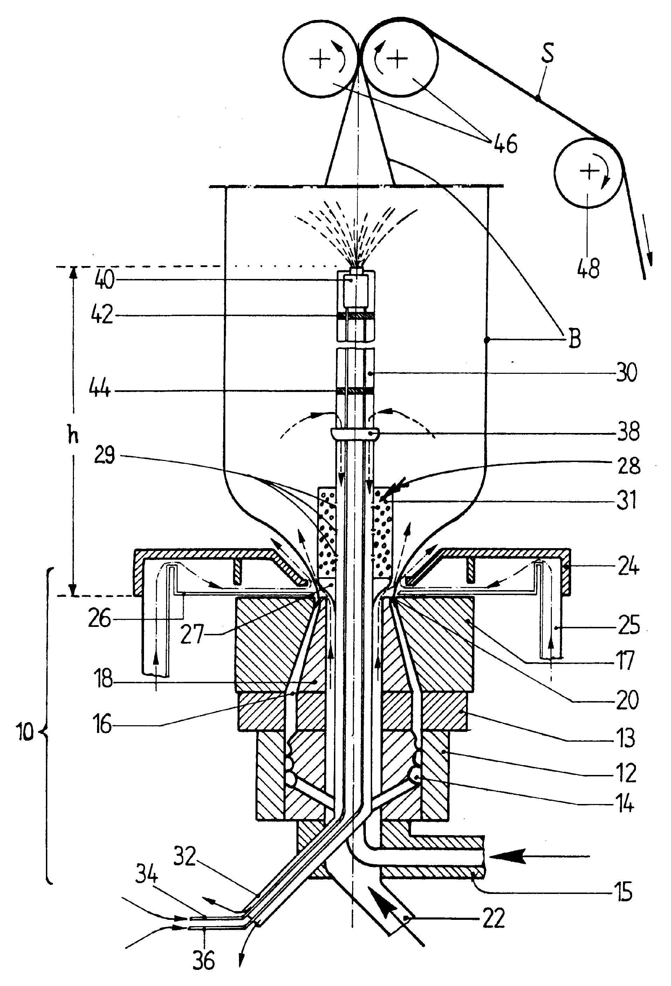

Weitere Merkmale, Einzelheiten und Vorteile der Erfindung ergeben sich aus dem Wortlaut der Ansprüche sowie aus der folgenden Beschreibung eines Ausführungsbeispiels anhand der Zeichnung. Deren einzige Figur veranschaulicht in schematischer Teilschnittansicht eine für die erfindungsgemäße Verfahrensführung besonders geeignete Vorrichtung.

Ein insgesamt mit 10 bezeichneter Blaskopf hat einen Heiz- und Druckring 12 sowie einen Blaskopf-Zwischenring 13 und innen eine Verteilerwendel 14 mit Schneckenanschluß 15. Letzterer speist einen ringförmigen Zufuhrkanal 16 für Strangpreßmasse, der zwischen einer Düsenplatte 17 und einem in ihr konzentrisch angeordneten Dorn 18 vorhanden ist. Der Zufuhrkanal 16 verjüngt sich nach oben und mündet in einer Ringdüse 20, nämlich in Form eines Düsenspaltes, aus dem die vorgeheizte Preßmasse unter Druck austritt. Ein aufgesetzter Kühlring 24 kann mit (nicht gezeichneten) Ankerschrauben befestigt sein, die ihn samt einem Gegenring 26 mit dem gesamten Blaskopf 10 zusammenhalten. Zwischen Kühlring 24 und Gegenring 26 ist ein Außenluftanschluß 25 vorgesehen, mit dem an den Düsenspalt bzw. die Ringdüse 20 Kühlluft radial herangeführt wird.

Vom unteren Teil des Blaskopfes 10 ausgehend führt vom Schneckenanschluß 15 ein Stützluft-Rohrstutzen 22 durch den Blaskopf 10 zentrisch hindurch. Im Inneren des Stützluft-Rohres 22 ist ein Tragrohr 30 angeordnet, das weit über die Ringdüse 20 sowie den Kühlring 24 nach oben ragt. Nahe dem Axialbereich des Kühlringes 24 ist das Tragrohr 30 mit einem Strömungsstabilisator 28 versehen, beispielsweise in Form von Austrittsöffnungen 29, Düsen o.dgl. Wahlweise oder zusätzlich kann in diesem Bereich konzentrisch eine Lochdose 31 angebracht sein, die an einem Ansatzkörper 27 befestigt ist, welcher in das obere Ende des Stützluft-Rohres 22 im Dorn 18 hineinragt.

Am unteren Ende des Tragrohres 30 befindet sich ein Innenluft-Absaugstutzen 32, in den eine Wasser-Zuführleitung 34 sowie eine Zerstäuberluft-Zuführleitung 36 hineingehen. Die beiden Leitungen 34, 36 durchsetzen die volle Länge des Tragrohres 30, das oben in einem Sprühkopf 40 endet. Zwei Halteplatten 42, 44 dienen zur Befestigung des Sprühkopfes 40 und als Abschirmblech oberhalb eines Absaugringes 38, der zwischen dem Sprühkopf 40 und dem Strömungsstabilisator 28 bzw. der Lochdose 31 angeordnet und mit dem Inneren des Tragrohres 30 strömungsverbunden ist.

Im Betrieb wird über den Schneckenanschluß 15 Preßmasse in die Verteilerwendel 14 des Heiz- und Druckringes 12 und weiter in den Zufuhrkanal 16 gedrückt, aus dem die Masse durch die Ringdüse 20 hindurch extrudiert wird. Gleichzeitig über das Rohr 22 innen zugeführte Stützluft 22 geht an dem Ansatzkörper 27 sowie dem Strömungsstabilisator 28 bzw. der Lochdose 31 vorbei und kühlt den entstehenden Blasschlauch B bereits in seinem unteren Teil. Von außen wird zwischen dem Kühlring 24 und dem Gegenring 26 durch den Anschluß 25 ebenfalls Kühlluft zugeführt, die an der Außenseite des Blasschlauches B entlangstreicht.

Während der Blasschlauch B ansteigt und sich verfestigt, wird aus dem Sprühkopf 40 durch die Zuführleitungen 34, 36 Flüssigkeit zerstäubt. Sie schlägt sich im Oberteil des Blasschlauch-Inneren nieder und bewirkt dabei ebenso rasch wie dauerhaft die antistatische Ausrüstung des hier bereits verfestigten Materials. Der Blasschlauch B wird an Abzugswalzen 46 zusammengeführt und über eine Umlenkwalze 48 in Form einer Schlauchbahn S abgezogen sowie anschließend gewickelt.

Ein wichtiges Merkmal der Erfindung besteht darin, daß der Sprühkopf 40 in einem Höhenabstand h oberhalb der Ringdüse 20 und mithin verhältnismäßig weit von ihr entfernt angeordnet ist. Dieser Abstand h ergibt sich aus den Regel-Parametern, zu denen die Foliendicke, Extrusionsdruck und -temperatur, Luftdruck im Blasschlauch B und Abzugsgeschwindigkeit der Schlauchbahn S gehören. Die Produktqualität und die Abzugsgeschwindigkeit werden maßgeblich davon beeinflußt, daß über den Absaugring 38 fortlaufend Innenluft verhältnismäßig nahe an dem Stabilisator 28 abgesaugt und über den Stutzen 32 nach außen gefördert wird. Da dieser Teil-Innenluftaustausch zur Abfuhr von Wärme aus dem Blasschlauch-Inneren wesentlich beiträgt, ohne von der weiter oben - nämlich aus dem Sprühkopf 40 - austretenden Feuchtigkeit nennenswerte Anteile mitzunehmen, erzielt man mit dieser Anordnung eine beträchtliche Leistungssteigerung gegenüber dem Stand der Technik. Der Blasschlauch B verfestigt sich aufsteigend sehr schnell; er erhält seine antistatische Ausrüstung im oberen Abschnitt vor den Abzugswalzen 46, wo die zusammengeführte Schlauchbahn S bereits kontinuierlich abgenommen werden kann, ohne daß die Gefahr des elektrostatischen Aneinanderhaftens der Innenflächen bestünde.

Zu dem Erfolg des erfindungsgemäßen Verfahrens trägt es ferner bei, daß der Innenluft-Stabilisator 28 die beim Einströmen der Stützluft auftretende Verwirbelung abdämpft. Dabei ist der gegebene Strömungswiderstand mäßig, so daß sich die Kühlluft gut ausbreiten kann. Es ist möglich und erfindungsgemäß auch vorgesehen, den Stabilisator 28 als Strömungs-Führungskörper zu gestalten, um die zugeführte Stützluft einerseits möglichst rasch an das untere Ende des Blasschlauch-Inneren zu bringen und andererseits die zügige Abfuhr eines Großteils der weitgehend trockenen Innenluft über den Absaugring 38 sicherzustellen.

Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in beliebiger Kombination erfindungswesentlich sein.

Bezugszeichenliste

| | |
|---|---|
| h | Abstand / Höhe |
| B | Blasschlauch |
| S | Schlauchbahn |
| 10 | Blaskopf |
| 12 | Heiz- und Druckring |
| 13 | Blaskopf-Zwischenring |
| 14 | Verteilerwendel |
| 15 | Schneckenanschluß |
| 16 | Zufuhrkanal |
| 17 | Düsenplatte |
| 18 | Dorn |
| 20 | Ringdüse |
| 22 | Stützluft-Rohr(stutzen) |
| 24 | Kühlring |
| 25 | Außenluftanschluß |
| 26 | Gegenring |
| 27 | Ansatzkörper |
| 28 | Stabilisator |
| 29 | Austrittsöffnungen |
| 30 | Tragrohr |
| 31 | Lochdose |

32 Innenluft-Absaugstutzen
34 Wasser-Zuführleitung
36 Zerstäuberluft-Zuführleitung
38 Absaugring
40 Sprühkopf
42 Halteplatte
44 Halteplatte
46 Abzugswalzen
48 Umlenkwalze

## Patentansprüche

1. Verfahren zum Herstellen von Schläuchen, Rohren oder Bahnen aus Kunststoff, insbesondere Polymeren, wobei das Material aus einem Blaskopf als Blasschlauch extrudiert und währenddessen in das Schlauchinnere Stützluft sowie feinverteilte Flüssigkeit, namentlich in Form von Nebel oder Dampf, eingeführt und Stützluft abgezogen wird, dadurch **gekennzeichnet**, daß die Flüssigkeit Antistatika enthält und mit gesteuerter Dosierung in vorgegebenem Abstand oberhalb des Blaskopfes zerstäubt wird, während Innenluftaustausch im Stützluft-Zufuhrbereich des Blasschlauches unter fortlaufender Teil-Luftabfuhr stattfindet.

2. Verfahren zum Herstellen von Schläuchen, Rohren oder Bahnen aus Kunststoff, insbesondere Polymeren, wobei dem zu formenden Material hydrophile Antistatika wie Fettsäureester zugesetzt werden, worauf es aus einem Blaskopf extrudiert wird, und wobei in das Innere des Blasschlauches während des Strangpressens Nebel und/oder Dampf zusammen mit Stützluft in solcher Dosierung eingeführt wird, daß das feinverteilt eingeführte Wasser vollständig von den auf der Innenseite des Blasschlauches vorhandenen Antistatika aufgenommen werden kann, während die Stützluft abgezogen wird, dadurch **gekennzeichnet**, daß die benötigte Wassermenge in vorgegebenem Abstand oberhalb des Blaskopfes gesteuert zerstäubt wird, während Innenluftaustausch im Stützluft-Zufuhrbereich des Blasschlauches unter fortlaufender Teil-Luftabfuhr stattfindet.

3. Verfahren nach Anspruch 1 oder 2, dadurch **gekennzeichnet**, daß die Teil-Luftabfuhr aus dem Blasschlauch-Inneren im Gegenstrom zur Zufuhr der Stützluft und der zu zerstäubenden Flüssigkeit erfolgt.

4. Vorrichtung zum Herstellen von Schläuchen oder Rohren aus Kunststoff, insbesondere Polymeren, mit einem Blaskopf (10) zum Extrudieren des zu verformenden Materials durch eine Ringdüse (20) hindurch, der ein sie außen umschließender Kühlring (24) zugeordnet ist, mit einer den Blaskopf (10) durchsetzenden inneren Düse (40) zur dosierten Zuführung von Stützluft sowie von Nebel und/oder Dampf während des Strangpressens und mit einem im Bereich des Blaskopfes (10) von dem Stützluft-Zuführrohr (22) umgebenen Luftabsaugkanal (30, 32), über den Stützluft abgezogen wird, insbesondere zum Durchführen des Verfahrens nach einem der Ansprüche 1 bis 3, dadurch **gekennzeichnet**, daß die als Sprühkopf ausgebildete, in vorgegebenem Abstand (h) oberhalb der Ringdüse (20) angeordnete innere Düse (40) am oberen Ende eines den Blaskopf (10) zentrisch durchsetzenden Tragrohres (30) sitzt und von separaten Leitungen (34, 36) gespeist ist, die im Inneren des Luftabsaugkanals (30, 32) verlaufen.

5. Vorrichtung nach Anspruch 4, dadurch **gekennzeichnet**, daß an dem Tragrohr (30) zwischen der inneren Düse (40) und einem Strömungsstabilisator (28) ein Luftabsaugering oder -stutzen (38) angeordnet ist.

6. Vorrichtung nach Anspruch 4 oder 5, dadurch **gekennzeichnet**, daß das Tragrohr (30) im Bereich der Ringdüse (20) einen Strömungsstabilisator (28) haltert oder bildet, der insbesondere Austrittsöffnungen (29), Düsen o.dgl. am oder im Tragrohr (30) aufweist.

7. Vorrichtung nach Anspruch 5 oder 6, dadurch **gekennzeichnet**, daß als Strömungsstabilisator (28) oder zusätzlich zu diesem eine Lochdose vorhanden ist, die das Tragrohr (30) im Axialbereich des Kühlringes (24) konzentrisch umgibt.

8. Vorrichtung nach einem der Ansprüche 4 bis 7, dadurch **gekennzeichnet**, daß den Zerstäuber-Zuführleitungen (34, 36) Reinigungsfilter und/oder Druckregler vorgeschaltet sind.

## Claims

1. Method for manufacturing hoses, tubes or webs of plastics material, in particular of polymeres, by extruding the material through a blowing head in the form of a bubble tube while introducing supporting air as well as finely divided liquid, especially by way of mist or vapour, into the tube interior and while exhausting supporting air, wherein the liquid comprises antistatic agents and is atomized under controlled dosage at a predetermined distance above the blowing head while there is an exchange of inner air in the supporting air feeding zone of the bubble tube with continuous partial air exhaustion.

2. Method for manufacturing hoses, tubes or webs of plastics material, in particular of polymeres, the material to be formed being compoounded with hydrophilous antistatic agents such as fatty acid esters whereupon it is extruded through a blowing head, mist and/or vapour being introduced along with supporting air into the bubble tube interior during the extrusion process in such dosage that the finely divided water introduced can be completely absorbed by the antistatic agents present on the bubble tube inside while the supporting air is exhausted, wherein the water quantity required is atomized under control at a predetermined distance above the blowing head under exchange of inner air in the supporting air feeding zone of the bubble tube with continuous partial air exhaustion.

3. Method according to claim 1 or claim 2, wherein the partial air exhaustion is effected in reverse direction to the feeding flow of supporting air and of the liquid to be atomized.

4. Device for manufacturing hoses or tubes of plastics material, in particular of polymeres, including a blowing head (10) for extruding the material to be moulded through a ring nozzle (20) to which a cooling ring (24) encompassing the latter is associated, an inner nozzle (40) extending through the blowing head (10) for dosed feeding of supporting air and of mist and/or vapour during the extrusion process, further including an air exhaust channel (30) through which supporting air is drawn off and which is surrounded in the vicinity of the blowing head (10) by the supporting air feeding sleeve (22), especially for carrying out the method according to any one of claims 1 to 3, wherein the inner nozzle (40) is designed as an atomizer head arranged at a predetermined distance (h) above the ring nozzle (20) at the upper end of a stay pipe (30) extending centrally through the blowing head (10) and is fed by separate ducts (34, 36) arranged within the air exhaust channel (30, 32).

5. Device according to claim 4, wherein an air exhaust ring or connector (38) is arranged at the stay pipe (30) between the inner nozzle (40) and a flow stabilizer (28).

6. Device according to claim 4 or claim 5, wherein in the vicinity of the ring nozzle (20), the stay pipe (30) supports or forms a flow stabilizer (28) comprising, in particular, outlets (29), nozzles or the like at or in the stay pipe (30).

7. Device according to claim 5 or claim 6, wherein as a flow stabilizer (28) or in addition thereto, there is a perforated box concentrically encompassing the stay pipe (30) in the axial zone of the cooling ring (24).

8. Device according to any one of claims 4 to 7, wherein the atomizer feeding ducts (34, 36) are preceded by cleaning filters and/or pressure controllers.

**Revendications**

1. Procédé de fabrication de films tubulaires, de tuyaux ou de bandes en matière plastique, particulièrement de polymères, où le matériau est extrudé d'une tête de soufflage comme gaine soufflée, pendant que de l'air de soutien et un liquide finement reparti sont introduits à l'intérieur de la gaine, notamment sous forme de brouillard ou de vapeur, et que de l'air de soutien est retiré, **caractérisé** par le fait que liquide contient des agents antistatiques et qu'il est pulvérisé avec un dosage commandé à une distance donnée au-dessus de la tête de soufflage, pendant qu'un échange de l'air intérieur a lieu dans le secteur d'arrivée de l'air de soutien de la gaine soufflée, avec une évacuation partielle et continue de l'air.

2. Procédé de fabrication de films tubulaires, de tuyaux ou de bandes en matière plastique, particulièrement de polymères, où l'on ajoute au matériau devant être formé des agents antistatiques hydrophiles tels que l'ester d'acide gras, à la suite de quoi il est extrudé d'une tête de soufflage, et où du brouillard et/ou de la vapeur sont introduits avec de l'air de soutien à un tel dosage pendant l'extrusion à l'intérieur de la gaine soufflée, que l'eau introduite et finement repartie peut être absorbée entièrement par les agents antistatiques présents sur le côté intérieur de la gaine soufflée, pendant que l'air de soutien est retiré, **caractérisé** par le fait que la quantité d'eau nécessitée est pulvérisée de façon contrôlée à une distance donnée au-dessus de la tête de soufflage, alors qu'un échange de l'air intérieur a lieu dans le secteur d'arrivée de l'air de soutien de la gaine soufflée, avec une évacuation partielle et continue de l'air.

3. Procédé conforme à la revendication 1 ou 2, **caractérisé** par le fait que l'évacuation partielle de l'air de l'intérieur de la gaine soufflée est effectuée à contre-courant de l'arrivée de l'air de soutien et du liquide devant être pulvérisé.

4. Dispositif de fabrication de films tubulaires ou de tuyaux en matière plastique, particulièrement de polymères, avec une tête de soufflage (10) pour extruder le matériau devant être déformé à travers une filière annulaire (20), à laquelle est assujetti un anneau de refroidissement (24) l'enveloppant à l'extérieur, avec une filière intérieure (40) traversant la tête de soufflage (10) pour une alimentation dosée en air de soutien et en brouillard et/ou en vapeur pendant l'extrusion, et avec un canal d'aspiration de l'air (30, 32), qui est entouré dans le secteur de la tête de soufflage (10) d'un tuyau d'alimentation en air de soutien (22), et par qui de l'air de soutien est retiré, particulièrement pour réaliser le procédé d'après l'une des revendications 1 à 3, **caractérisé** par le fait que la filière intérieure (40) en forme de tête de pulvérisation disposée à une distance donnée (h) au-dessus de la filière annulaire (20) est située à l'extrémité supérieure d'un tuyau porteur (30) traversant la tête de soufflage (10) au centre et qu'elle est alimentée par des conduites séparées (34, 36) qui passent à l'intérieur du canal d'aspiration de l'air (30, 32).

5. Dispositif conforme à la revendication 4, **caractérisé** par le fait qu'un anneau ou manchon d'aspiration de l'air (38) est disposé sur le tuyau porteur (30) entre la filière intérieure (40) et un stabilisateur de courant (28).

6. Dispositif conforme à la revendication 4 ou 5, **caractérisé** par le fait que dans le secteur de la filière annulaire (20), le tuyau porteur (30) supporte ou forme un stabilisateur de courant (28), qui a notamment des ouvertures de sortie (29), des filières, etc. sur ou dans le tuyau porteur (30).

7. Dispositif conforme à la revendication 5 ou 6, **caractérisé** par le fait qu'il y a comme stabilisateur de courant (28) ou complémentairement à celui-ci une boîte perforée, qui entoure concentriquement le tuyau porteur (30) dans le secteur axial de l'anneau de refroidissement (24).

8. Dispositif conforme à l'une de revendications 4 à 7, **caractérisé** par le fait que des filtres de nettoyage et/ou des régulateurs de pression sont placés avant les conduites d'alimentation (34, 36) du pulvérisateur.